# EUROPÄISCHE PATENTSCHRIFT

(11) **EP 2 364 618 B1**
(45) Veröffentlichungstag und Bekanntmachung des Hinweises auf die Patenterteilung: **05.12.2012**
(21) Anmeldenummer: 11156829.1
(22) Anmeldetag: 03.03.2011
(51) Int. Cl.: A47C 23/00, A47C 27/14, F16F 1/37

(54) **Federelement für Matratzen**
Spring element for mattresses
Elément de ressort pour matelas

(30) Priorität: 09.03.2010 AT 3782010
(43) Veröffentlichungstag der Anmeldung: 14.09.2011
(73) Patentinhaber: WI-LA Handels GmbH, 8582 Rosental (AT)
(72) Erfinder:
(74) Vertreter: Limbeck, Achim

(56) Entgegenhaltungen:
- EP-A1- 1 787 552
- EP-A2- 0 839 481
- US-A- 2 768 924

## Beschreibung

Die Erfindung betrifft ein Federelement für Matratzen oder dergleichen mit elastisch verformbaren Federkörpern, die mit Verbindungselementen zu einer flächigen Struktur verbunden sind, wie z.B. in US 2 768 924 A1.

Moderne Matratzen haben eine Vielfalt von unterschiedlichen Anforderungen zu erfüllen. Zum einen muss eine ausreichende Stützfunktion für den menschlichen Körper gegeben sein, zum anderen soll eine Matratze jedoch auch weich und nachgiebig sein und sich der anatomischen Struktur des Körpers anpassen. Neben der Erfüllung dieser Anforderungen soll eine Matratze auch weitere Eigenschaften aufweisen, wie Atmungsaktivität, Robustheit, Langlebigkeit und dergleichen. Im Lichte dieser Aufgaben hat es sich als günstig herausgestellt, Federelemente vorzusehen, die insbesondere die elastischen Eigenschaften einer Matratze beeinflussen. Solche Federelemente können grundsätzlich im Inneren von Matratzen in entsprechenden Hohlräumen vorgesehen sein, aber auch unterhalb der Matratze als Auflagefläche für diese angeordnet sein. Die vorliegende Erfindung betrifft primär ein solches Federelement, das in Verbindung mit Matratzen einsetzbar ist.

Aufgabe der vorliegenden Erfindung ist es, bekannte Federelemente so weiterzubilden, dass ein optimale Unterstützung des menschlichen Körpers erreicht wird.

Erfindungsgemäß ist vorgesehen, dass die Federkörper aus unteren Stützkörpern und oberen Stützkörpern zusammengesetzt sind, die in mehreren Reihen angeordnet sind, wobei die unteren Stützkörper und die oberen Stützkörper einer Reihe durch schräge Verbindungselemente verbunden sind, und dass die einzelnen Reihen durch Verbindungsstege verbunden sind, die an den schrägen Verbindungselementen ansetzen, so dass die unteren Stützkörper und die oberen Stützkörper in der Draufsicht auf die flächige Struktur auf Lücke angeordnet sind. Von oben gesehen sind dabei die Stützkörper ähnlich einem Schachbrett angeordnet, wobei beispielsweise die weißen Felder den oberen Stützkörpern und die schwarzen Felder den unteren Stützkörpern entsprechen. Durch die schrägen Verbindungselemente können die einzelnen Stützkörper bei Belastung nicht nur quer zur Liegeebene ausweichen, sondern setzen einer Belastung auf Scherung einen gewissen elastischen Widerstand entgegen. Durch die erfindungsgemäße Anordnung auf Lücke wird ein besonders angenehmes Liegeverhalten erreicht. Insbesondere wird die notwendige Rückstellkraft für die Stützung des Körpers entsprechend der anatomisch vorgegebenen Form in angepasster Weise zur Verfügung gestellt.

Ein weiterer besonderer Vorteil der erfindungsgemäßen Lösung besteht darin, dass zwischen den einzelnen Reihen ausreichend große Querschnitte zur Belüftung quer zur Ebene des Federelements zur Verfügung stehen.

Besonders günstig ist es, wenn das Federelement einstückig aus einem Elastomer, vorzugsweise aus PUR-Elastomer oder PUR-Integralschaum hergestellt ist. Polyurethanschäume haben sich bei der Herstellung der erfindungsgemäßen Federelemente als besonders begünstigt herausgestellt. Insbesondere sind Integralschäume, die mit einem auf Kohlenwasserstoffen basierenden Treibmittel geschäumt sind, besonders vorteilhaft.

Eine erste besonders bevorzugte Ausführungsvariante der vorliegenden Erfindung sieht vor, dass die unteren Stützkörper und die oberen Stützkörper im Wesentlichen blockförmig ausgebildet sind und durch geradlinige Verbindungselemente verbunden sind. Diese Ausführungsvariante ist besonders für Anordnungen günstig, bei denen die Matratze auf dem Federelement aufliegt. Die oberen Stützkörper bieten dabei eine ausreichende Stützfläche für die Matratze.

Alternativ kann vorgesehen sein, dass die unteren Stützkörper und die oberen Stützkörper und die Verbindungselemente eine wellenförmige Struktur bilden. Diese Ausführungsvariante ist besonders dafür geeignet, in entsprechenden Hohlräumen der Matratze angeordnet zu sein.

Die Herstellung des erfindungsgemäßen Federelements wird insbesondere dadurch erleichtert, dass vorzugsweise die Verbindungselemente durchgängig linear die Reihen der Stützkörper durchsetzen.

Weiters betrifft die vorliegende Erfindung eine Matratze mit einem Hohlraum, der mit einem Federelement in der oben beschriebenen Art ausgefüllt ist. Weiters betrifft die Erfindung einen Betteinsatz, der eine Tragstruktur aufweist, auf der ein Federelement wie oben beschrieben, eine darauf liegende Matratze trägt. Erfindungsgemäß ist vorgesehen, dass die Tragstruktur Ausnehmungen für die unteren Stützkörper des Federelements aufweist. Auf diese Weise kann eine sowohl formschlüssig als auch kraftschlüssig verbundene Gesamtstruktur erreicht werden.

In der Folge wird die vorliegende Erfindung anhand der in den Figuren dargestellten Ausführungsbeispiele näher erläutert. Es zeigen:
- Fig. 1: eine erste Ausführungsvariante der Erfindung in axonometrischer Darstellung;
- Fig. 2: ein Detail der Darstellung von Fig. 1.;
- Fig. 3: eine Ansicht von oben;
- Fig. 4: und Fig. 5 seitliche Ansichten gemäß Blickrichtungen IV und V in Fig. 3;
- Fig. 6: eine weitere Ausführungsvariante in einer Ansicht von oben;
- Fig. 7: und Fig. 8 Ansichten der Ausführungsvariante von Fig. 6 in den Richtungen VII und VIII;
- Fig. 9: eine alternative Ausführungsvariante der Erfindung; und
- Fig. 10: ein Detail der Ausführungsvariante von Fig. 9.

Das erfindungsgemäße Federelement besteht aus unteren Stützkörpern 1 und oberen Stützkörpern 2 die über Verbindungselemente 3 miteinander verbunden sind um Reihen 4 auszubilden. Die einzelnen Reihen 4 werden durch geradlinige Verbindungselemente 5 miteinander verbunden um eine flächige Struktur zu bilden. Zwischen den Reihen 4 sind viele Öffnungen 6 vorgesehen, die eine hervorragende Ventilation ermöglichen.

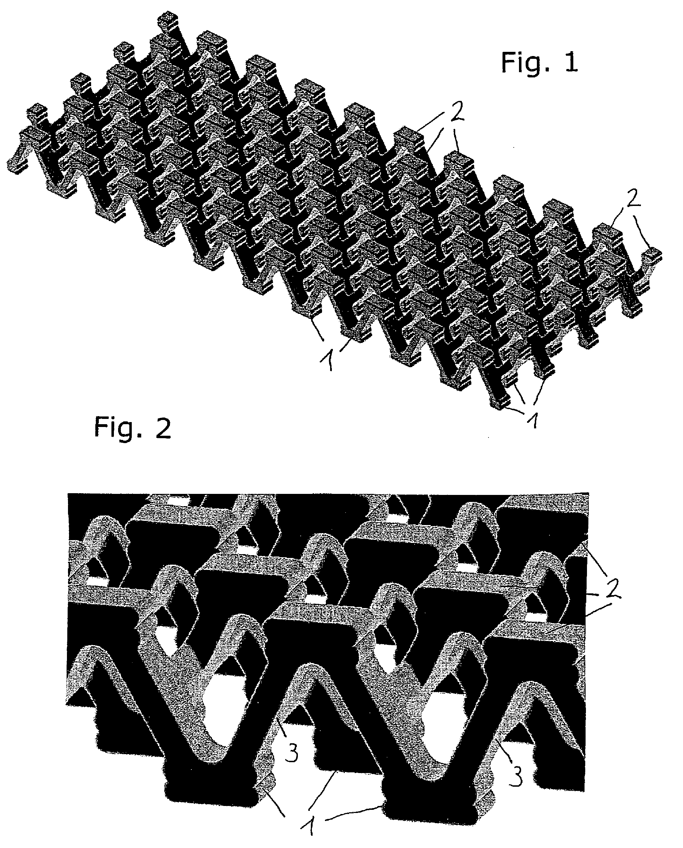

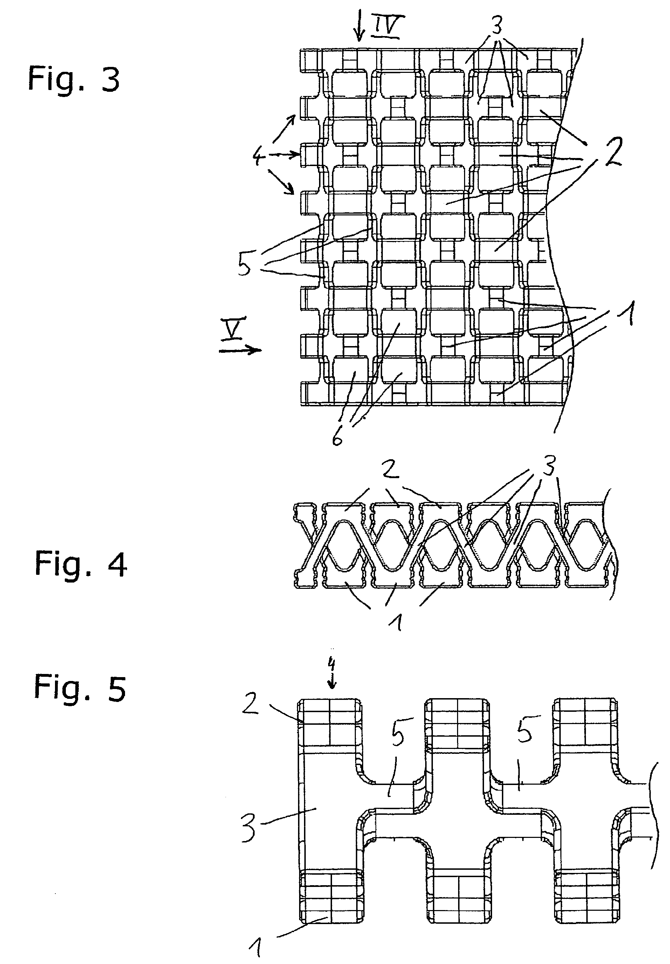

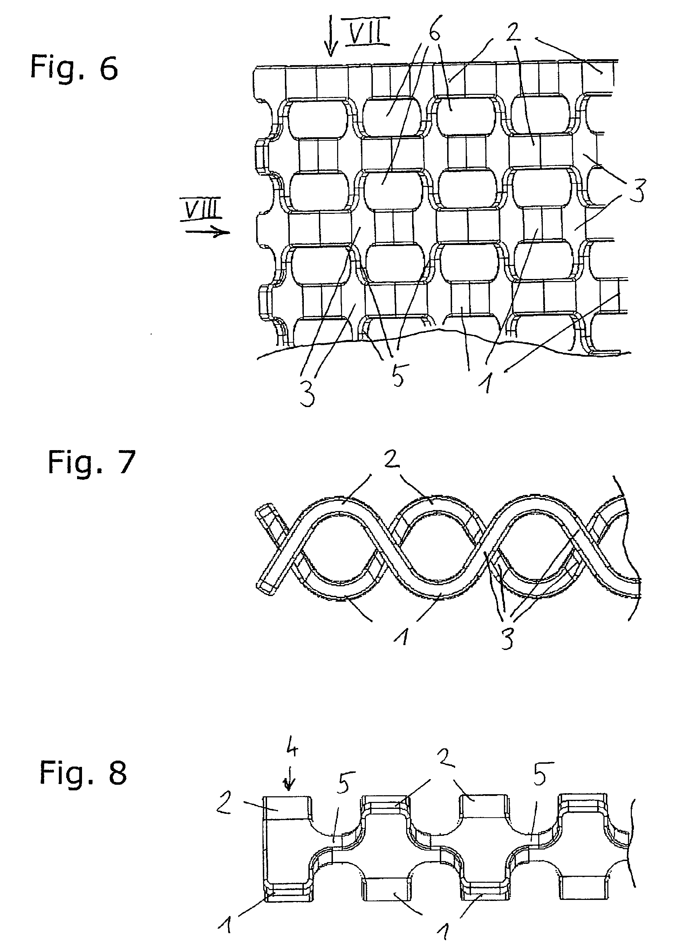

Bei der Ausführungsvariante der Fig. 1 bis Fig. 5 sind die unteren und die oberen Stützkörper 1, 2 im Wesentlichen blockförmig ausgebildet, während bei der Ausführungsvariante der Fig. 6 bis Fig. 8 eine abgerundete Form der Stützkörper 1, 2 vorliegt, die gemeinsam mit den Verbindungselementen 3 eine wellige Struktur ergibt.

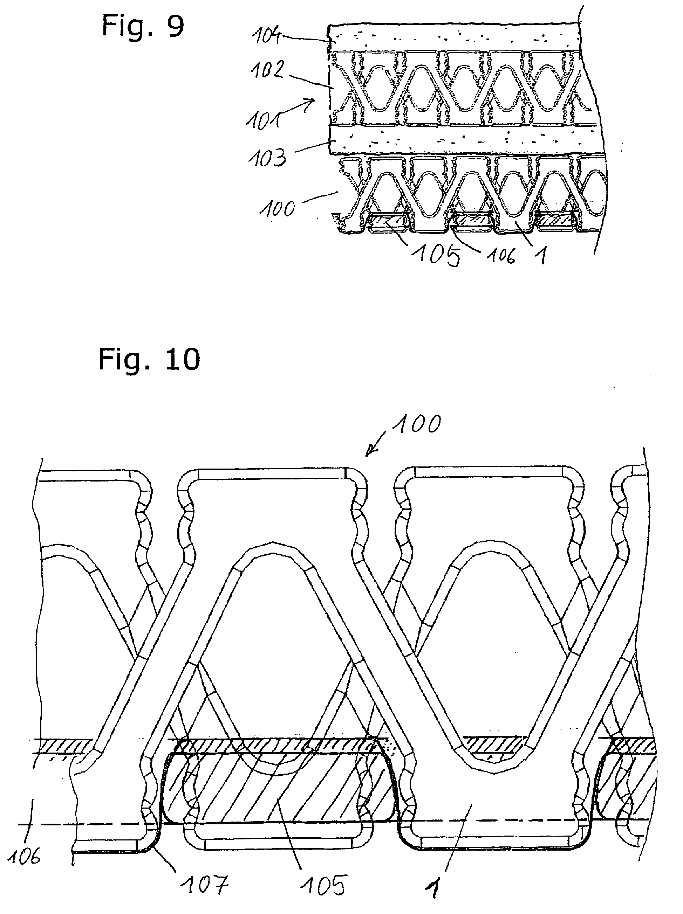

In Fig. 9 ist ein Detail eines erfindungsgemäßen Betteinsatzes dargestellt. Der Betteinsatz von Fig. 9 besteht aus einer Tragstruktur 105 in der Form eines modifizierten Lattenrosts, der Ausnehmungen 106 aufweist. Auf dem Lattenrost 105 ist ein flexibles Band 107 gelagert, das sich in die Ausnehmungen 106 hinein erstreckt und die unteren Stützkörper eines ersten Federelements 100 trägt. Auf dem ersten Federelement 100 ist eine insgesamt mit 101 bezeichnete Matratze gelagert, die aus einer unteren Schicht 103 aus Latex einem weiteren Federelement 102 und einer oberen Latexschicht 104 besteht.

In Fig. 10 ist die Lagerung des unteren Federelements 100 in stark vergrößertem Maßstab dargestellt. Es ist ersichtlich, dass das Band 107, das von der Tragstruktur 105 gehalten wird, sich in die Ausnehmungen 106 hinein erstreckt und die unteren Stützkörper 1 umschlingt um diese zu tragen.

Durch eine erfindungsgemäße Lösung wird die anatomisch vorgegebene Form des Körpers unterstützt, wobei jedoch gleichzeitig ausreichende Kräfte aufgebracht werden, die zur Lagerung des Körpers erforderlich sind. Unterschiedliche Einsink- und Stützcharakteristiken können durch Verwendung unterschiedlich elastischer Materialien und durch Variation der geometrischen Parameter erreicht werden. Das erfindungsgemäße Federelement kann in Hohlräumen von Matratzen aus Schaumstoff oder Latex eingefügt werden, so dass die individuelle Härte der Matratze dem Gewicht und der Gewichtsverteilung des Benutzers angepasst werden kann.

## Patentansprüche

1. Federelement für Matratzen oder dergleichen mit elastisch verformbaren Federkörpern, die mit Verbindungselementen zu einer flächigen Struktur verbunden sind, **dadurch gekennzeichnet, dass** die Federkörper aus unteren Stützkörpern (1) und oberen Stützkörpern (2) zusammengesetzt sind, die in mehreren Reihen (4) angeordnet sind, wobei die unteren Stützkörper (1) und die oberen Stützkörper (2) einer Reihe durch schräge Verbindungselemente (3) verbunden sind, und dass die einzelnen Reihen durch Verbindungsstege (5) verbunden sind, die an den schrägen Verbindungselementen ansetzen, so dass die unteren Stützkörper (1) und die oberen Stützkörper (2) in der Draufsicht auf die flächige Struktur auf Lücke angeordnet sind.

2. Federelement nach Anspruch 1, **dadurch gekennzeichnet, dass** das Federelement (3) einstückig aus einem Elastomer, vorzugsweise aus PUR-Elastomer oder PUR-Integralschaum hergestellt ist.

3. Federelement nach Anspruch 1 oder 2, **dadurch gekennzeichnet, dass** die unteren Stützkörper (1) und die oberen Stützkörper (2) im Wesentlichen blockförmig ausgebildet sind und durch geradlinige Verbindungselemente (5) verbunden sind.

4. Federelement nach Anspruch 1 oder 2, **dadurch gekennzeichnet, dass** die unteren Stützkörper (1) und die oberen Stützkörper (2) und die Verbindungselemente (3) eine wellenförmige Struktur bilden.

5. Federelement nach einem der Ansprüche 1 bis 4, **dadurch gekennzeichnet, dass** die Verbindungselemente (3) durchgängig linear die Reihen (4) der Stützkörper (1, 2) durchsetzen.

6. Matratze mit einem Hohlraum, der mit einem Federelement (101) nach einem der Ansprüche 1 bis 5, ausgefüllt ist.

7. Betteinsatz mit einer Tragstruktur (105), einem Federelement (100) nach einem der Ansprüche 1 bis 5 und mit einem Matratze, **dadurch gekennzeichnet, dass** die Tragstruktur (105) Ausnehmungen für die unteren Stützkörper (1) aufweist.

## Claims

1. Spring element for mattresses or the like with elastically malleable spring components that are connected to a flat structure with a connecting element **characterised by** the springs being made of upper (2) and lower supporting parts (1) arranged in several rows (4) with the lower (1) and upper (2) ones in each row being connected by slanted connecting elements (3) and the rows also connected by strips (5) to one another that are attached to the connecting elements so that the lower supporting parts (1) and the upper ditto are spaced when viewed from above.

2. Spring element per claim 2 **characterised by** the spring element (3) being made all of a piece from an elastomer, preferably PUR elastomer or PUR integral foam.

3. Spring element per claim 1 or 2 **characterised by** the lower supporting part (1) and the upper ditto (2) mainly being block shaped connected by straight strips (5).

4. Spring element per claim 1 or 2 **characterised by** the lower supporting body (1) and the upper ditto (2) forming a wave-shaped structure together with the connecting elements (3).

5. Spring element per any of claims 1 to 4 **characterised by** the connecting elements (3) penetrating the supporting body (1) rows (4) in linear fashion.

6. Mattresses with hollow interiors filled with a spring element (101) per any of claims 1 to 5.

7. Bed insert with a carrying structure (105), a spring element (100) per any of claims 1 to 5 and a mattress **characterised by** the carrying structure (105) having apertures to accommodate the lower supporting part/s (1).

## Revendications

1. Élément à ressort pour matelas ou pour produit similaire doté de corps de ressort élastiquement déformables qui sont reliés à une structure de forme plane par l'intermédiaire d'éléments de liaison, **caractérisés en ce que** lesdits corps de ressort comportent des organes de support inférieurs (1) et supérieurs (2), qui sont disposés en plusieurs rangées (4), dans lesquelles les organes de support inférieurs (1) et supérieurs (2) d'une rangée sont reliés par le biais d'éléments de liaison obliques (3), et **en ce que** les différentes rangées sont reliées au moyen de traverses de liaison (5) qui se fixent aux éléments de liaison obliques de sorte que les organes de support inférieurs (1) et supérieurs (2) sont disposés en vue de dessus sur la structure plane des espaces vides.

2. Élément de ressort selon la revendication 1, **caractérisé en ce que** l'élément de ressort (3) est intégralement réalisé en élastomère, de préférence en élastomère de polyuréthanne (PUR) ou en mousse de polyuréthanne (PUR) à peau intégrale.

3. Élément de ressort selon la revendication 1 ou 2, **caractérisé en ce que** les organes de support inférieurs (1) et supérieurs (2) sont essentiellement réalisés sous forme de bloc et reliés par des éléments de liaison rectilignes (5).

4. Élément de ressort selon les revendications 1 ou 2, **caractérisé en ce que** les organes de support inférieurs (1) et supérieurs (2) et les éléments de liaison (3) forment une structure ondulée.

5. Élément de ressort selon une des revendications 1 à 4, **caractérisé en ce que** les éléments de liaison (3) passent en ensembles linéaires continus à travers les rangées (4) des organes de support (1, 2) .

6. Matelas avec une cavité qui est munie d'un élément de ressort (101) selon une des revendications 1 à 5.

7. Sommier doté d'une structure de support (105), d'un élément de ressort (100) selon une des revendications 1 à 5 et d'un matelas, **caractérisé en ce que** la structure de support (105) présente des cavités pour les organes de support inférieurs (1).
